# EUROPEAN PATENT SPECIFICATION

(11) **EP 4 448 610 B1**
(45) Date of publication and mention of the grant of the patent: **08.10.2025**
(21) Application number: 22846899.7
(22) Date of filing: 12.12.2022
(51) Int. Cl.: C08G 18/76, C08G 18/48, C08G 18/32, C08G 18/24, C08G 18/20, C08G 18/16, C08G 18/10, C08G 18/66, C08J 9/12, C08J 11/04, C08J 9/30, C08L 75/04, C08J 11/06

(54) **THERMOPLASTIC OPEN-CELL FLEXIBLE POLYURETHANE FOAM**
THERMOPLASTISCHER OFFENZELLIGER POLYURETHANWEICHSCHAUM
MOUSSE DE POLYURÉTHANE SOUPLE THERMOPLASTIQUE À CELLULES OUVERTES

(30) Priority: 16.12.2021 EP 21215299
(43) Date of publication of application: 23.10.2024
(73) Proprietor: BASF SE, 67056 Ludwigshafen am Rhein (DE)
(72) Inventor: SDRUJKOWSKI, Waldemar, 49448 Lemfoerde (DE); BOKERN, Stefan, 49448 Lemfoerde (DE); OTERO MARTINEZ, Iran, 49448 Lemfoerde (DE); POESELT, Elmar, 49448 Lemfoerde (DE)
(74) Representative: BASF IP Association
(86) International application number: PCT/EP2022/085400
(87) International publication number: WO 2023/110753

(56) References cited:
- WO-A1-2021/094239
- JP-A- 2002 347 057
- US-A1- 2008 132 591

## Description

The present invention relates to a method for the production of a thermoplastic molded polyurethane flexible foam having a foam density of 15 to 100 g/dm³ comprising mixing of (a) Diisocyanate, (b) Polyol having an OH number of less than 280 mg KOH/g and an average functionality of 1.9 - 2.2 (c) 3 to 20 wt.-% based on the total weight of components a) to c), of one or more chain extenders, (d) optionally catalyst and (e) optionally fillers and/or polyurethane additives at an isocyanate index of 80 to 110 to form a reaction mixture, wherein the amount of water added to the reaction mixture is less than 0.1 % by weight, based on the total weight of components a) to e), mixing the reaction mixture with a gas at an isocyanate content of the reaction mixture of more than 0.05 % by weight, based on the total weight of the mixture, to form a pre-foam having a density of 110 to 800 g/dm³ injecting the pre-foam into a mold, applying vacuum to the mold to further expand the pre-foam and curing the expanded pre-foam. The invention is further directed to a thermoplastic flexible polyurethane foam, obtainable from such a method, a composite, comprising such a thermoplastic flexible polyurethane foam and a method of recycling such a composite. The invention is set out in the appended set of claims.

Recycling of polyurethane foams is still an unmet need by the industry. Recycling of flexible polyurethane foams by extrusion or injection molding to compact or foamed parts would be highly desired due to the possible substitution of virgin-grade thermoplastic polyurethane, which would lower the overall consumption of virgin-grade raw materials without the need of a chemical work-up.

Conventional polyurethane flexible foams are produced by reaction of polyisocyanates with polyols having an average functionality of 2.4 to about 4 and water as blowing agent. This results in a crosslinked polyurethane wherein the higher functional polyols form chemical crosslinks and urea groups form physical crosslinks.

It is well known in the field of polyurethanes that flexible polyurethane foams are usually not recyclable by thermoplastic processing due to the crosslinking of the polyol phase and the high melting temperature of the urea hard phase, which usually is above the degradation temperature of the polyurethane. Both properties lead to the issue that the material either is not meltable under classic extrusion or injection molding conditions, or they have an extremely low melt flow, which makes them unsuitable for extrusion or injection molding applications.

WO 2019/122122 discloses a process to produce a preferably water-blown flexible open-cell polyurethane foams which is processible by extrusion. This is achieved by a limitation of the crosslinking density in the polyol phase to 1.9-2.2 and a relatively low water content, which leads to a relatively low Urea-content in the final material. The drawback of this invention is the need to combine this foamed material with virgin grade thermoplastic polyurethane to make it processible, due to the high melt viscosity of the Urea-containing polyurethane foam.

WO 2021/094239 discloses a process to make a physically blown flexible open-cell polyurethane foam which is processible by extrusion. This is achieved by using a polyurethane recipe based on linear polyols and linear isocyanates, which are expanded to an open-celled foam with density <200 g/dm³ by a physical blowing agent as a necessary ingredient. While the use of gases like nitrogen and CO₂ as physical blowing agents is mentioned, a person skilled in the art is aware that in a process as disclosed in WO2021122122 it is difficult to achieve low densities for example below 250 g/dm³. In the described examples, water and hydrohaloolefines, which are liquid at room temperature, are used as blowing agent. In this process, a flexible foam with a large amount of closed cells is obtained, which, in addition to its high density, shows a high tendency of undesired shrinkage after cooling. In addition, this approach has the drawback of a low economic efficiency because of the high cost of physical blowing agents and of the release of the organic physical blowing agent to the environment. Additionally, residue of the physical blowing agent may be trapped within the material and released at a later stage as undesired emissions. It is also known that a foam process based on the evaporation of a physical blowing agent is extremely sensitive to variations in temperature, which may lead to strong variations in density, for example between the hot core of a foam which leads to a lower density, and the colder outer layer which leads to a higher density.

It was object of the present invention to provide a thermoplastic polyurethane flexible foam having a foam density of 15 to 100 g/dm³ which can be recycled by thermoplastic processing, has a high open cell content, good mechanical properties like a low compression set, a low hardness and a homogeneous density. In addition, it was object to provide such foam which is recyclable by thermoplastic processing without the addition of virgin thermoplastic polyurethane wherein the thermoplastic polyurethane has a high melt flow index, also known as melt flow rate.

Surprisingly it was found that a method for the production of a thermoplastic molded polyurethane flexible foam having a foam density of 15 to 100 g/dm³ comprising mixing of (a) Diisocyanate, (b) Polyol having an OH number of less than 280 mg KOH/g and an average functionality of 1.9 - 2.2 (c) 3 to 20 % by weight, based on the total weight of components a) to c), of one or more chain extenders, (d) optionally catalyst and (e) optionally fillers and/or polyurethane additives at an isocyanate index of 80 to 110 to form a reaction mixture, wherein the amount of water added to the reaction mixture is less than 0.1 % by weight, based on the total weight of components a) to e), mixing the reaction mixture with a gas at an isocyanate content of the reaction mixture of more than 0.05 % by weight, based on the total weight of the mixture, to form a pre-foam having a density of 110 to 800 g/dm³ injecting the pre-foam into a mold, applying vacuum to the mold to further expand the pre-foam and curing the expanded pre-foam.

The preparation of thermoplastic polyurethane (TPU) requires a mixture of isocyanates and polyols. The further addition of chain-extending agents, catalysts, fillers, polyurethane additives is optional and can take place individually or in all possible variations.

Preferred embodiments utilize aliphatic, cycloaliphatic, araliphatic and/or aromatic diisocyanates as diisocyanates (a) and mixtures thereof. Examples of preferred diisocyanates are trimethylene diisocyanate, tetramethylene diisocyanate, pentamethylene diisocyanate, hexamethylene diisocyanate, heptamethylene diisocyanate, octamethylene diisocyanate, 2-methyl-1,5-pentamethylene diisocyanate, 2-ethyl-1,4-butylene diisocyanate, 1,5-pentamethylene diisocyanate, 1,4-butylene diisocyanate, 1-isocyanato-3,3,5-trimethyl-5-isocyanatomethylcyclohexane, 1,4-bis(isocyanatomethyl)cyclohexane, 1,3-bis(isocyanatomethyl)cyclohexane, 1,4-cyclohexane diisocyanate, 1-methyl-2,4-cyclohexane diisocyanate, 1methyl-2,6-cyclohexane diisocyanate, 2,2'-dicyclohexylmethane diisocyanate, 2,4'-dicyclohexylmethane diisocyanate, 4,4'-dicyclohexylmethane diisocyanate, Isomers of diphenylmethane diisocyanate (MDI), as 2,2'-diphenylmethane diisocyanate, 2,4'-diphenylmethane diisocyanate (2,4'-MDI) and 4,4'-diphenylmethane diisocyanate (4,4'-MDI), 1,5-naphthylene diisocyanate (1,5-NDI), isomers of tolylene diisocyanate (TDI) as 2,4-tolylene diisocyanate (2,4-TDI) and 2,6-tolylene diisocyanate (2,6-TDI), 3,3'-dimethylbiphenyl diisocyanate, p-phenyldiisoisocyanate 1,2-diphenylethane diisocyanate and phenylene diisocyanate. In a preferred embodiment the isocyanate (a) is selected from the group consisting of 1,5-pentamethylene diisocyanate 2,4'-MDI, 4,4'-MDI, mixtures of MDI such as mixtures of 2,4'-MDI and 4,4'-MDI, mixtures of 2,4-TDI and 2,6-TDI and NDI. Especially preferred the isocyanate (a) comprises at least 97 % by weight, based on the total weight of the isocyanates (a) of 4,4'-MDI, more preferably 97 to 99 % 4,4'-MDI.

As polyol having an OH number of less than 280 mg KOH/g and an average functionality of 1.9 - 2.2 (b) all polyols commonly used in the field of thermoplastic polyurethanes can be used. The isocyanate-reactive hydrogen-containing group is preferably a hydroxyl group. It is particularly preferable for the polyol to be selected from polyetherol, polyesterol and polycarbonate diol or mixtures thereof. In further preferred embodiments, the polyols used for preparing the thermoplastic polyurethane have hydroxyl values of 225 to 14 mg KOH/g, more preferably of 190 to 20 mg KOH/g and especially of 190 to 28 mg KOH/g. In further preferred embodiments, the polyols have an average functionality of 1.97 - 2.05, more preferably of 1.99 - 2.01 and especially of 2.00.

The thermoplastic polyurethane is preferably prepared from polyetherol. It is particularly preferable to use polyether diol, as for example polypropylene glycol, ethylene oxide capped polypropylene glycol, polytetramethylene glycol or polytrimethylene oxide. Polytetramethylene glycol is the particularly preferred polyether diol. Preference is given to using polyether alcohols and polytetramethylene glycol having a hydroxyl number between 190 and 45 mg KOH/g. The polyether alcohols are used individually or else as a mixture of various polyether alcohols.

In an alternative embodiment, a polyester alcohol is used to prepare the thermoplastic polyurethane. Polyester diol is used for this in a preferred embodiment. A preferred polyester diol is prepared from adipic acid and/or succinic acid and diols, having 2 to 8 carbon atoms, especially preferred is 1,4-butanediol. Preferred embodiments of polyester alcohols have a hydroxyl number between 190 and 45 mg KOH/g.

In a particularly preferred embodiment, the polyol comprises at least 80 % by weight of the polyol component (b) polytetramethylene glycol and especially preferred is a polytetramethylene glycol wherein the polytetramethylene glycol has a hydroxyl number of 190 to 55 mg KOH/g.

As chain extender (c) 3 to 20 % by weight, preferably 3 to 10 % by weight, more preferably 3 to 9 % by weight and especially preferred 3 to 8 % by weight, each based on the total weight of components a) to c), of chain extenders commonly known in the field of thermoplastic polyurethane can be used. For example aromatic compounds as hydroquinone bis (2-hydroxyethyl) ether (HQEE) or 3,5-diethyltoluene-2,4-diamine, aliphatic compounds as C₂ to C₁₀ diols or cycloaliphatic compounds are mentioned. These chain extenders have two hydrogen groups reactive towards isocyanates, preferably two hydroxyl groups, and a molecular weight of 62 to less than 400 g/mol, preferably from 62 to less than 300 g/mol and especially preferred from 76 to less than 200 g/mol. In a preferred embodiment of the present invention the chain extender (c) is selected from the group consisting of Ethanediol, 1,3-Propanediol, 1,4-Butanediol, 1,5-Pentanediol, 1,6-Hexanediol and mixtures thereof, in an especially preferred embodiment the chain extender (c) is 1,4-Butanediol.

If a catalyst is present, a catalyst commonly known in the field of thermoplastic polyurethane can be used. Such catalysts catalyze in particular the reaction between the isocyanate groups of the diisocyanates (a) and the isocyanate-reactive compounds, preferably hydroxyl groups, of the polyols (b), the chain extenders (c) and other compounds having isocyanate reactive hydrogen groups as for example chain transfer agents. In preferred embodiments, the catalyst is selected from the group of tertiary amines, for example triethylamine, dimethylcyclohexylamine, N-methylmorpholine, N,N'-dimethylpiperazine, 2-(dimethylaminoethoxy)ethanol, diazabicyclo(2,2,2)octane and similar substances. In further preferred embodiments, the at least one catalyst is selected from the group of organometallic compounds and is, mentioned by way of example, a titanic ester, an iron compound, for example iron(III) acetylacetonate, a tin compound, for example tin diacetate, tin dioctoate, tin dilaurate or a tin dialkyl salt of an aliphatic carboxylic acid such as dibutyltin diacetate, dibutyltin dilaurate or the like.

Some embodiments utilize the catalysts individually, while other embodiments utilize mixtures of catalysts. The catalyst used in one preferred embodiment is a mixture of catalysts in amounts of 0.0001 % by weight to 0.1 % by weight, based on the compound having at least two isocyanate-reactive hydrogen-containing groups, preferably the polyhydroxy compound.

Useful additives (e) include for example surface-active substances, flame retardants, oxidation stabilizers, slip and demolding assistants, dyes and pigments, optionally additional further stabilizers, for example against hydrolysis, light, heat or discoloration, reinforcing agents and plasticizers. Any fillers can be organic and/or inorganic.

Suitable catalysts and additives are discernible from standard reference works such as for example the above-cited Gerhard W. Becker and Dietrich Braun, Kunststoffhandbuch, volume 7 "Polyurethane", Carl Hanser Verlag, Munich, Vienna, 1993 and include hydrolysis control agents, flame retardants, chain transfer agents,
Hydrolysis control agents, for example polymers and low molecular weight carbodiimides, can also be added to the reaction mixture, optionally directly or via the addition to the polyols (b) or isocyanates (a).

When fillers are comprised, these are for example organic and inorganic powders or fibrous materials and also mixtures thereof. Useful organic fillers include for example wood flour, starch, flax fibers, hemp fibers, ramie fibers, jute fibers, sisal fibers, cotton fibers, cellulose fibers or aramid fibers. Useful inorganic fillers include for example silicates, barite, glass balls, zeolites, metals or metal oxides. Particular preference is given to using pulverulent inorganics such as chalk, kaolin, aluminum hydroxide, magnesium hydroxide, aluminum nitrite, aluminum silicate, barium sulfate, calcium carbonate, calcium sulfate, silica, powdered quartz, Aerosil, argillaceous earth, mica or wollastonite or spherical or fibrous inorganics, for example iron powder, glass balls, glass fibers or carbon fibers. The average particle diameter or, in the case of fibrous fillers, the length of the fibers should be in the region of the cell size or less. Preference is given to an average particle diameter or average fiber length in the range from 0.1 to 100 µm and preferably in the range from 1 to 50 µm. Filler can be used in an amount of 0 to 40 % by weight, based on the total weight of compounds (a) to (c). In a preferred embodiment 0 to 10 % by weight, more preferred 0 to 5 and especially preferred 0 % by weight of fillers are used.

Useful surface-active substances for inclusion in the thermoplastic molding composition include for example compounds which are used to augment homogenization of starting materials and may also be capable of regulating the cell structure. Suitable surface-active substances include for example emulsifiers, for example sodium salts of castor oil sulfates or of fatty acids and also salts of fatty acids with amines, for example diethylamine oleate, diethanolamine stearate, diethanolamine ricinoleate, salts of sulfonic acids, for example alkali metal or ammonium salts of dodecylbenzene- or dinaphthylmethanedisulfonic acid and ricinoleic acid; foam stabilizers such as siloxane-oxyalkylene interpolymers and other organosiloxanes, ethoxylated alkylphenols, ethoxylated fatty alcohols, paraffin oils, castor oil esters or ricinoleic esters, Turkey red oil and peanut oil, and cell regulators, for example paraffins, fatty alcohols and dimethylpolysiloxane. Oligomeric polyacrylates having polyoxyalkylene and fluoroalkane moieties as side groups are further useful for improving the emulsifying effect, the cell structure and/or the stabilization thereof. Surface-active substances are typically used in amounts of 0.01 to 5 % by weight, based on 100 % by weight of compound having at least two isocyanate-reactive hydrogen-containing groups.

In a preferred embodiment of the invention the thermoplastic molded polyurethane flexible foam according to the invention comprises that at least 0.5 % by weight, preferably 0.8 to 4 % by weight, more preferably 1 to 2.5 % by weight and especially preferred 1.2 to 2 % by weight, based on the total weight of the compounds (a), (b) and (c), of a surface active substance, preferably at least one organosiloxane and especially preferred at least one siloxane-oxyalkylene interpolymer as stabilizer. Such siloxane-oxyalkylene interpolymers are well known and commercially available for example under the trade name Tegostab^{®} B 8476, Tegostab^{®} BF 2370, Tegostab^{®} B 8110, Tegostab^{®} B8418. Tegostab^{®} B 8467 of the company Evonik, Niax^{®} L 634 of the company Mo-mentive or combinations thereof.

Suitable flame retardants include for example tricresyl phosphate, tris(2-chloroethyl) phosphate, tris(2-chloropropyl) phosphate, tris(1,3-dichloropropyl) phosphate, tris(2,3-dibromopropyl) phosphate and tetrakis(2-chloroethyl)ethylene diphosphate. In addition to the halogen-substituted phosphates already mentioned, inorganic flame retardants comprising red phosphorus, aluminum oxide hydrate, antimony trioxide, arsenic trioxide, ammonium polyphosphate and calcium sulfate or cyanuric acid derivatives, for example melamine or mixtures of at least two flame retardants, for example ammonium phosphate and melamine and also optionally starch and/or expandable graphite can also be used for conferring flame retardancy on the foamed polyurethanes produced. It will generally prove advantageous to use from 0 % to 50 % by weight and preferably from 5 % to 25 % by weight of flame retardant or flame retardant mixtures for each 100 parts by weight of the diisocyanate (a), the polyol (b) and of the chain extenders (c).

In a further embodiment, the thermoplastic polyurethane may comprise a phosphorus compound as an antioxidant. A preferred embodiment uses organophosphorus compounds of trivalent phosphorus, for example phosphites and phosphonites. Examples of suitable phosphorus compounds are triphenyl phosphites, diphenyl alkyl phosphite, phenyl dialkyl phosphite, tris(nonylphenyl) phosphite, trilauryl phosphite, trioctadecyl phosphite, distearylpentaerythritol disphosphite, tris(2,4-di-tert-butylphenyl) phosphite, diisodecylpentaerythritol diphosphite, di(2,4-di-tert-butylphenyl)pentaerythritol diphosphite, tristearylsorbitol triphosphite, tetrakis(2,4-di-tert-butylphenyl)-4,4'-biphenylylene diphosphonite, triisodecyl phosphite, diisodecyl phenyl phosphite and diphenyl isodecyl phosphite or mixtures thereof.

Particularly preferred embodiments comprise phosphorus compounds that are difficult to hydrolyze, since the hydrolysis of a phosphorus compound to the corresponding acid can lead to damage being inflicted on the polyurethane, especially the polyester urethane. Accordingly, phosphorus compounds that are particularly difficult to hydrolyze are suitable for polyester polyurethanes in particular. Preferred embodiments of difficult-to-hydrolyze phosphorus compounds are dipoly-propylene glycol phenyl phosphite, diisodecyl phosphite, triphenylmonodecyl phosphite, triisononyl phosphite, tris(2,4-di-tert-butylphenyl) phosphite, tetrakis(2,4-di-tert-butylphenyl)-4,4'-biphenylylene diphosphonite and di(2,4-di-tert-butylphenyl)pentaerythritol diphosphite or mixtures thereof.

In addition, chain transfer agents can be used. When chain transfer agents are used, these typically have a molecular weight of 30 g/mol to 500 g/mol. Chain transfer agents are compounds that have only one functional group in respect of the reaction with isocyanates. Examples of chain transfer agents are monofunctional alcohols, monofunctional amines, preferably methylamine and/or monofunctional polyols. Chain transfer agents can be used to specifically control the flow characteristics of mixtures of the individual components. Chain transfer agents in preferred embodiments are used in an amount of 0 part by weight to 5 parts by weight and more preferably in the range from 0.1 part by weight to 1 part by weight, based on 100 parts by weight of the compound having at least two isocyanate-reactive hydrogen-containing groups.

The reaction to form the thermoplastic polyurethane is started by mixing the diisocyanates (a) and the isocyanate reactive components (b) and (c) as well as optionally catalysts (d) and fillers and additives (e). The formation of the reaction mixture is carried out at customary indices. The index is defined as the ratio of the total number of isocyanate groups of the aromatic, aliphatic and/or cycloaliphatic diisocyanate (a) which are used in the reaction to the total number of isocyanate-reactive groups, i.e., the number of active hydrogens in the polyols (b) and the chain extenders (c) as well as any compound having isocyanate reactive hydrogen atoms in the catalysts (d) and the additives (e). An index of 100 means that there is one active hydrogen atom, i.e., an isocyanate-reactive function per isocyanate group of the diisocyanate (a). Indices above 100 mean that there are more isocyanate groups than there are isocyanate-reactive groups, for example hydroxyl groups.

In particularly preferred embodiments the reaction to form the thermoplastic polyurethane takes place at an index between 80 and 110 and more preferably at an index between 90 and 105, even more preferred 95 to 102 and especially 99 to 101.

It is essential for the present invention that the amount of water added to the reaction mixture is below 0.1 % by weight, preferably below 0.05 % by weight and especially preferred below 0.01% by weight, each based on the total weight of components a) to e). Water can be added separately but can also be part of one component, for example part of the polyols (b) or the chain extenders (c).

At a content of Isocyanate groups, also known as NCO content, of the reaction mixture of more than 0.05 % by weight, preferably more than 0.1 and less than 15 % by weight, more preferred more than 1 and less than 10 % by weight and especially preferred more than 1.5 and less than 5 % by weight, each based on the total weight of the diisocyanates (a), the polyols (b) and the chain extenders (c), the reaction mixture is mixed with a gas to form a pre-foam having a density of 110 to 800 g/dm³, preferably 200 to 350 g/dm³. Preferably this gas does not react with the components of the reaction mixture. Suitable as gas in the sense of the present invention is a compound having a boiling point at atmospheric pressure (standard pressure, 1013 hPa) of less than 20 °C, preferably less than 0 °C. Suitable gases are carbon dioxide, nitrogen, nitrogen oxide or air. The mixing can be performed by conventional means, for example a mechanical mixer.

The obtained pre-foam is then injected into a mold. The amount of pre foam in the mold is calculated that the desired density of the thermoplastic flexible foam according to the invention can be obtained. Then vacuum is applied to the mold to expand the pre-foam. It is essential for the present invention that the NCO content of the pre-foam at the moment when the vacuum is applied is in the range of 0.1 and less than 15 % by weight, more preferred more than 1 and less than 10 % by weight and especially preferred more than 1.5 and less than 5 % by weight, each based on the total weight of the diisocyanates (a), the polyols (b) and the chain extenders (c). The mold can be tempered at usual temperatures, for example 20 °C to 120 °C, preferably 30 °C to 80 °C and especially preferred 40 to 70 °C. The vacuum applied generally is at least as low as the vacuum needed to fill the mold and depends on the density of the pre-foam, the volume of the mold and the amount of pre-foam injected into the mold. Generally the absolute pressure of the vacuum applied is less than 60.000 Pa, preferably more than 1000 Pa and less than 60.000 Pa, more preferably more than 5.000 Pa and less than 30.000 Pa and more preferred more than 10.000 Pa and less than 25.000Pa.

When the foam is cured, it is removed from the mold. The foam can for example be removed when its volume does not change due to the removal of vacuum by more than 20 %, preferably not more than 10 % and more preferred not more than 5 %, each based on the total volume of the mold.

The thermoplastic polyurethane flexible foam according to the invention has a foam density of 15 to 100 g/dm³, preferably 20 to 80 g/dm³, more preferably 25 to 60 g/dm³ and especially preferred 30 to 50 g/dm³, an air flow according to DIN EN ISO 7231 (December 2010 ) as a parameter for open cell content of more than 0.1 dm³/s, preferably more than 0.15 dm³/s, a compression set according to DIN EN ISO 1856 (November 2020) at 22h/70°C/50% of preferably less than 20%, more preferred of less than 15 % and more preferably less than 10 %, a hardness CLD at 40% according to DIN EN ISO 3386 (October 2015) according to DIN EN ISO 3386 of preferably below 10 kPa, more preferably below 7 kPa and most preferably below 5 kPa.

The thermoplastic polyurethane of the foam according to the invention preferably has a melt flow index according to ASTM D 1238 B at 220 °C and 21.6 kg weight of more than 0g/10min, more preferred of more than 10 g/10min, at 220°C and 21.6 kg weight of more than 50 g/10 min, more preferred at 190°C and 21.6 kg weight of more than 5g/10min, and more preferred at 190°C and 21.6kg weight of more than 20g/10min. In an especially preferred embodiment of this invention, the melt flow index at 190°C and 21.6.kg weight is between 5g/10min and 150g/10min.

In a preferred embodiment of the present invention, the foam is part of a mattress, an upholstery for seats, part of a car seat or an office chair, part of a shoe sole, cushions or sofas. The thermoplastic foam according to the invention can also be part of a composition, comprising the thermoplastic polyurethane flexible foam according to the invention and thermoplastic polyurethane other than the thermoplastic polyurethane flexible foam. This might be a fiber material as a woven or non-woven material, covering the foam, as for example in its application as cushion foam or seat foam, a solid or foamed thermoplastic elastomer (TPE), as expanded thermoplastic elastomerbeads (also called bead-foam or particle-foam) such as TPU-beads (E-TPU), for example in shoe applications as shoe sole or shoe upper material. Preferably such a multi material TPU laminate comprises TPU's which differ by less than 10 % by weight in their starting substances and preferably identical TPU building blocks are used.

In case TPE- or more favorable TPU-beads are used in combination with the described TPU foam they can be either be added to the prefoam to obtain a mixture and thereupon a combination of a particle- and a block-foam or been used as bead foam part for example obtained by steam chest molding, either been in placed next to, adhered or directly melted to the hereby described thermoplastic molded polyurethane flexible foam.

The TPU foam according to the invention can easily be modified by applying heat and/or pressure to its surface. For example with this treatment a solid surface layer may be obtained or the foam might be adhered to any other surface material by melting its surface and contacting it to the other material.

The TPU foam according to the invention can easily be recycled by simply melting the TPU, for example in an extruder. For such a process it is not necessary to add virgin TPU since the molten foam according to the invention has a very high melt flow index. The molten TPU then can be used to produce novel TPU materials.

Advantages of a thermoplastic polyurethane flexible foam according to the present invention are in addition to is good mechanical properties and the possibility to recycle and to re-use the thermoplastic polyurethane material are its low emissions of volatile organic materials, especially of residues of physical blowing agents, its homogenous density and its low MDA content on the surface compared to traditional flexible polyurethane foams.

The present invention is illustrated by the following examples:
The following substances were applied:
Polyol 1 polyTHF 1000 from the company BASF, a linear Polytetramethyleneglycol with an OH value of 112
Polyol 2 polyTHF 2000 from the company BASF, a linear Polytetramethylenegylcol with an OH value of 56
Polyol 3 Lupranol 1000/1 from the company BASF, a linear polypropylene glycol catalyzed by KOH catalysis and a OH value of 55
Isocyanate 1 Lupranat ME from the company BASF, a 4,4'-MDI of at least 97% purity
Isocyanate 2 is a prepolymer based on 4'4-MDI of at least 97% purity and a linear Polytetramethyleneglycol with an OH value of 56, with a composition of 46.5% Polytetramethyleneglycol and 53.5% Isocyanate
Chemical Blowing agent: Water
Physical Blowing agent: Opteon^{®} 1100 from the company Chemours

### Experimental procedure according to the state of the Art (Example 1, 3-5)

Polyols, chain extenders, catalysts and optionally chemical and physical blowing agents according to Table 1 are mixed at 25°C, or at 50 °C in case of the usage of raw materials which are solid at room temperature. 100 gram of this mixture is then mixed with the according amount of isocyanates (index 100) and poured into an open mold with a temperature of 40°C.

### Examples processed according to the invention (Example 2)

Polyols, chain extenders, catalysts and optionally chemical and physical blowing agents according to table 1 are mixed at 25°C, or at 50 °C in case of the usage of raw materials which are solid at room temperature. 100 gram of this mixture is then mixed with the according amount of isocyanates (index 100) and a gas is added under vigorous mixing, until the apparent density of the mixture drops below 300 g/l, to yield a closed-cell pourable pre-foam which is not fully cured. At a residueal NCO content of 3.8 % by weight of the pre-foam, an open mold is filled to 1/10 of its volume with this pre-foam and is immediately put into a vacuum chamber, and a vacuum with an absolute pressure of about 10.000 to 20.000 Pa is applied. The sample is cured under constant vacuum. Vacuum is then removed. Measurements of physical properties were done after at least 24 hours at ambient conditions.

**Table 1**

| Recipe | | Example 1 (state of the Art) | Example 2 (inventive) | Example 3 (state of the Art) | Example 4 (inventive) | Example 5 (state of the Art) |
|---|---|---|---|---|---|---|
| Polyol 1 | | 34.8 | 34.8 | | 43.5 | 34.8 |
| Polyol 2 | | 34.8 | 34.8 | 65.7 | 43.5 | 34.8 |
| Polyol 3 | | 0.57 | 0.57 | | 0.55 | 0.55 |
| 1,4-Butanediol | | 9.6 | 9.6 | 13.3 | 12 | 9.6 |
| Isocyanate 1 | | | | 46,33 | | |
| Isocyanate 2 | | 74.95 | 74.95 | | 91.96 | 151.5 |
| Niax L-634 | | 0.12 | 0.12 | 0.1 | | |
| Tin octoate | | | | 0.12 | | |
| Triethylenediamine, 33 wt.-% in dipropylene glycol | | 0.12 | 0.12 | | 0.15 | 0.15 |
| 1,8-Diazabicy-clo[5.4.0]undec-7-en, phenol salt | | 0.03 | 0.03 | | 0.03 | 0.03 |
| Teqostab B 8476 | | 1.6 | 1.6 | | 2 | |
| Water | | <0.02 | <0.02 | <0.02 | <0.02 | 2 |
| Opteon 1100 | | 18.3 | | 18.3 | | |
| Processed according to the invention | | no | yes | no | yes | no |
| Average density | | 78 g/L | 24.8 g/L | 38 g/L | 35.8 g/L | 130 g/L |
| Density variation within foam | | >30% | <20% | >30% | <20% | <20% |
| Emissions from blowing agent | µg C /g foam | > 10 | Not detectable | > 10 | Not detectable | Not detectable |
| **CLD 25%** | kPa | | | | 2,9 | |
| **CLD 40%** | kPa | 10.9 | 2.8 | 11.81 | 3,6 | >20 |
| **CLD 65%** | kPa | | | | 7,0 | |
| **Hysteresis at 70%** | % | | | | 22,4 | |
| **Air Flow** | dm³/s | | | | 0,151 | |
| **Tensile Strength** | kPa | | | | 150 | |
| **Elongation** | % | | | | 319 | |
| **Compression Set** | % | | | | 9,6 | |
| **Ball Rebound** | % | | | 38 | 36 | |
| **Wet Compression Set** | % | | | | 6,9 | |
| **Melt flow rate at 220°C,8.7kg** | g/10 min | >200 | >200 | >200 | >200 | <5 |
| **Melt flow rate at 190°C, 3.4kg** | g/10min | >20 | >20 | >20 | >20 | 0 |

Compression Load Deflection (CLD) hardness and density of the foam have been determined according to DIN EN ISO 3386 (October 2015).

Air flow has been determined according to DIN EN ISO 7231 (December 2010).

Tensile Strength and Elongation has been determined according to DIN EN ISO 1798 (April 2008).

Compression set has been determined for 22h at 70 °C and a compression of 50 % according to DIN EN ISO 1856 (2020).

Ball rebound has been determined according to DIN EN ISO 8307 (2018).

Wet compression set has been determined for 22h at 50 °C, 95 % relative humidity and a compression of 70 % according to DIN EN ISO 1856 (2020).

Emissions from the blowing agent were measured according to VDA 277 (1995). After storing the sample at ambient conditions for 24 hours, 0.5g of the sample were filled into a testing vial and tempered for one hour at 120°C. The gas phase was injected into a gas chromatograph
To determine the density variation within the foam, a 50x50x50 cm sample is produced according to the description, with a mold temperature of 40 °C. After 24 hours at ambient conditions, the foam sample is cut horizontally and the upper 20cm and the lower 10cm are discarded. The rest of the sample is cut into measurement samples with a size of 10x10x5cm. The density variation is given as a percentage value by dividing the density of the measurement sample with the highest density with the density of the measurement sample with the lowest density.

NCO content is determined by titration according to DIN EN ISO 14896 (2009). Hydroxyl value or OH values are determined via titration according to DIN EN ISO 4692-2 (2016).

Dynamich mechanical analysis (DMA) has been carried out on an instrument from Rheometric Scientific (ARES) according to DIN EN ISO 6721 (2019).

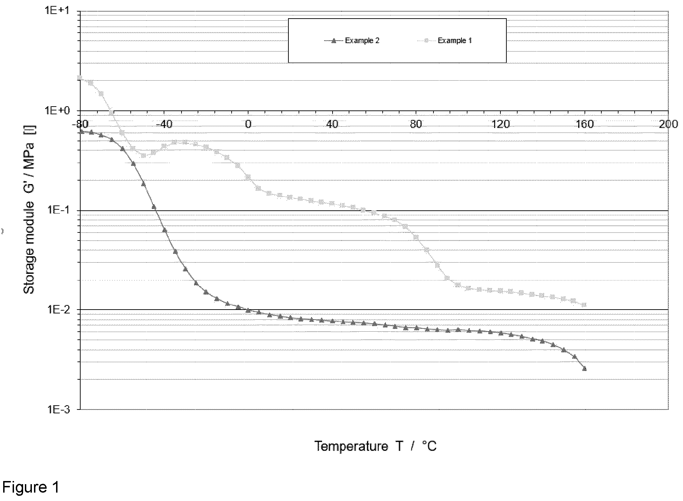

In figure 1 a DMA measurement of the foams according to comparative example 1 and inventive example 2 is shown. It can be observed that the foam according to the invention shows several advantages over the foam according to the state of the art:
Compared to the foam according to the state of the art the inventive foam shows an excellent viscoelastic plateau in the range of 0 °C to 50 °C which is desired for comfort applications as matresses, upholstery and cushions.

It is believed that physical blowing agents can act as a solvent and lead to a dissolution of the crystalline MDI/chain extender hard phase in the soft phase, which disturbs the phase separation and leads to much higher hardness for the identical polyurethane matrix composition in the application range of 0°C to +50°C, which is undesired for comfort applications of the foam. The inventive process leads to a very good phase separation, which is indicated by an excellent viscoelastic plateau in the DMA measurement within the application range. In the final application, this leads to a drastically reduced CLD hardness, which is desired for comfort applications.

## Claims

1. Method for the production of a thermoplastic molded polyurethane flexible foam having a foam density of 15 to 100 g/dm³ comprising mixing of
a) Diisocyanate,
b) Polyol having an OH number of less than 280 mg KOH/g and an average functionality of 1.9 - 2.2,
c) 3 to 20 wt.-%, based on the total weight of components a) to c), of one or more chain extenders,
d) Optionally catalyst and
e) Optionally fillers and/or polyurethane additives
at an isocyanate index of 80 to 110 to form a reaction mixture, wherein the amount of water added to the reaction mixture is less than 0.1 % by weight, based on the total weight of components a) to e),
mixing the reaction mixture with a gas at an isocyanate content of the reaction mixture of more than 0.05 % by weight, based on the total weight of the mixture, to form a pre-foam having a density of 110 to 800 g/liter,
injecting the pre-foam into a mold,
applying vacuum to the mold to further expand the pre-foam and curing the expanded pre-foam.

2. Method according to claim 1, **characterized in that** the gas is a compound or mixture of compounds having a boiling point at a pressure of 1013 hPa of less than 20 °C.

3. Method according to claim 1 or 2, **characterized in that** the pressure of the vacuum applied is less than 800 mbar.

4. Method according to any of claims 1 to 3, **characterized in that** the fillers and/or additives (e) comprise at least 0.5 % by weight, based on the total weight of the compounds (a), (b) and (c), of a surface active substance comprising at least one siloxane-oxyalkylene interpolymer.

5. Method according to any of claims 1 to 4, **characterized in that** polyol component (b) comprises polytetramethyleneglycol.

6. Method according to any of claims 1 to 5, **characterized in that** the diisocyanates (a) comprise at least 97 % by weight of 4,4'-Diphenylmethanediisocyanate, based on the total weight of isocyanates (a).

7. Method according to any of claims 1 to 6, **characterized in that** the chain extender (c) is selected from the group consisting of Ethandiol, 1,3 Propandiol, 1,4-Butandiol, 1,5-Pentandiol and 1,6-Hexandiol.

8. Thermoplastic polyurethane flexible foam having a foam density of 15 to 100 g/dm³ obtainable according to any of claims 1 to 7.

9. Thermoplastic polyurethane flexible foam according to claim 8, **characterized in that**
the air flow according to DIN EN ISO 7231 (December 2010 ) is higher than 0.1 dm³/s,
the compression set according to DIN EN ISO 1856 (November 2020) is after 22 hours heat storage at 70 °C and 50% compression is less than 20% and
the compression load deflection (CLD) hardness according to DIN EN ISO 3386 (October 2015) is below 10 kPa.

10. Thermoplastic polyurethane flexible foam according to claim 8 or 9, **characterized in that** the thermoplastic polyurethane of the foam has a melt flow index according to ASTM D 1238 B at 190 °C and 3.4 kg of >0, preferably of >10.

11. Thermoplastic polyurethane flexible foam according to any of claims 8 to 10, **characterized in that** the foam is part of a mattress or upholstery for seats.

12. Composition comprising a thermoplastic polyurethane flexible foam according to any of claims 8 to 11 and thermoplastic polyurethane other than the thermoplastic polyurethane flexible foam which is at least 90% by weight identical in composition to said foam.

13. Composition according to claim 12, **characterized in that** the thermoplastic polyurethane of all components of the composition is identical.

14. Recycling of a composition according to claim 13 comprising the step of melting the composition and forming new thermoplastic polyurethane products.

## Patentansprüche

1. Verfahren zur Herstellung eines thermoplastischen geformten Polyurethan-Weichschaumstoffs mit einer Schaumstoffdichte von 15 bis 100 g/dm³, umfassend Mischen von
a) Diisocyanat,
b) Polyol mit einer OH-Zahl von kleiner als 280 mg KOH/g und einer mittleren Funktionalität von **1,9-2,2,**
c) 3 bis 20 **Gew.-%,** bezogen auf das Gesamtgewicht der Komponenten a) bis c), an einem oder mehreren Kettenverlängerern,
d) gegebenenfalls Katalysator und
e) gegebenenfalls Füllstoffen und/oder Polyurethanzusatzstoffen
mit einem Isocyanatindex von 80 bis 110, um ein Reaktionsgemisch zu bilden, wobei die Menge an zu dem Reaktionsgemisch zugegebenem Wasser kleiner als 0,1 Gew.-%, bezogen auf das Gesamtgewicht der Komponenten a) bis e), ist,
Mischen des Reaktionsgemischs mit einem Gas bei einem Isocyanatgehalt des Reaktionsgemischs von mehr als 0,05 Gew.-%, bezogen auf das Gesamtgewicht des Gemischs, um einen Vorschaum mit einer Dichte von 110 bis 800 g/Liter zu bilden,
Einspritzen des Vorschaums in ein Formwerkzeug,
Anlegen von Unterdruck an das Formwerkzeug, um den Vorschaum weiter zu expandieren, und Härten des expandierten Vorschaums.

2. Verfahren nach Anspruch 1, **dadurch gekennzeichnet, dass** das Gas eine Verbindung oder ein Gemisch von Verbindungen mit einem Siedepunkt bei einem Druck von 1013 hPa von weniger als 20 °C ist.

3. Verfahren nach Anspruch 1 oder 2, **dadurch gekennzeichnet, dass** der Druck des angelegten Unterdrucks kleiner als 800 mbar ist.

4. Verfahren nach einem der Ansprüche 1 bis 3, **dadurch gekennzeichnet, dass** die Füll- und/oder Zusatzstoffe (e) wenigstens 0,5 Gew.-%, bezogen auf das Gesamtgewicht der Verbindungen (a), (b) und (c), an einem oberflächenaktiven Stoff umfassen, der wenigstens ein Siloxan-Oxyalkylen-Interpolymer umfasst.

5. Verfahren nach einem der Ansprüche 1 bis 4, **dadurch gekennzeichnet, dass** die Polyolkomponente (b) Polytetramethylenglycol umfasst.

6. Verfahren nach einem der Ansprüche 1 bis 5, **dadurch gekennzeichnet, dass** die Diisocyanate (a) wenigstens 97 Gew.-% 4,4'-Diphenylmethandiisocyanat bezogen auf das Gesamtgewicht der Isocyanate (a) umfassen.

7. Verfahren nach einem der Ansprüche 1 bis 6, **dadurch gekennzeichnet, dass** der Kettenverlängerer (c) ausgewählt ist aus der Gruppe bestehend aus Ethandiol, 1,3-Propandiol, 1,4-Butandiol, 1,5-Pentandiol und 1,6-Hexandiol.

8. Thermoplastischer Polyurethan-Weichschaumstoff mit einer Schaumstoffdichte von 15 bis 100 g/dm³, erhältlich nach einem der Ansprüche 1 bis 7.

9. Thermoplastischer Polyurethan-Weichschaumstoff nach Anspruch 8, **dadurch gekennzeichnet, dass** der Luftstrom nach DIN EN ISO 7231 (Dezember 2010) höher als 0,1 dm³/s ist, der Druckverformungsrest nach DIN EN ISO 1856 (November 2020) nach 22 Stunden Wärmespeicherung bei 70 °C und 50 % Kompression kleiner als 20 % ist und
die Drucklastverformungs(OLD)-Härte nach DIN EN ISO 3386 (Oktober 2015) unter 10 kPa beträgt.

10. Thermoplastischer Polyurethan-Weichschaumstoff nach Anspruch 8 oder 9, **dadurch gekennzeichnet, dass** das thermoplastische Polyurethan des Schaumstoffs einen Schmelzflussindex nach ASTM D 1238 B bei 190 °C und 3,4 kg von > 0, vorzugsweise von > 10, aufweist.

11. Thermoplastischer Polyurethan-Weichschaumstoff nach einem der Ansprüche 8 bis 10, **dadurch gekennzeichnet, dass** der Schaumstoff Teil einer Matratze oder Sitzpolsterung ist.

12. Zusammensetzung umfassend einen thermoplastischen Polyurethan-Weichschaumstoff nach einem der Ansprüche 8 bis 11 und ein thermoplastisches Polyurethan, das von dem thermoplastischen Polyurethan-Weichschaumstoff verschieden ist und in der Zusammensetzung zu wenigstens 90 Gew.-% identisch mit dem Schaumstoff ist.

13. Zusammensetzung nach Anspruch 12, **dadurch gekennzeichnet, dass** das thermoplastische Polyurethan aller Komponenten der Zusammensetzung identisch ist.

14. Recycling einer Zusammensetzung nach Anspruch 13, umfassend den Schritt von Schmelzen der Zusammensetzung und Bilden neuer thermoplastischer Polyurethanprodukte.

## Revendications

1. Procédé de production d'une mousse flexible de polyuréthane thermoplastique moulée présentant une masse volumique de 15 à 100 g/dm³, comprenant le mélange de
a) diisocyanate,
b) un polyol ayant un indice OH inférieur à 280 mg KOH/g et une fonctionnalité moyenne de 1,9 à 2,2,
c) 3 à 20 % en poids, par rapport au poids total des composants a) à c), d'un ou plusieurs extenseurs de chaîne,
d) facultativement un catalyseur et
e) facultativement des charges et/ou des additifs de polyuréthane
à un indice d'isocyanate de 80 à 110 pour former un mélange réactionnel, la quantité d'eau ajoutée au mélange réactionnel étant inférieure à 0,1 % en poids, par rapport au poids total des composants a) à e),
le mélange du mélange réactionnel avec un gaz à une teneur en isocyanate du mélange réactionnel supérieure à 0,05 % en poids, par rapport au poids total du mélange, pour former une prémousse présentant une masse volumique de 110 à 800 g/litre,
l'injection de la prémousse dans un moule,
l'application de vide au moule pour dilater davantage la prémousse et durcir la prémousse expansée.

2. Procédé selon la revendication 1, **caractérisé en ce que** le gaz est un composé ou un mélange de composés ayant un point d'ébullition à une pression de 1013 hPa inférieur à 20 °C.

3. Procédé selon la revendication 1 ou 2, **caractérisé en ce que** la pression de vide appliquée est inférieure à 800 mbar.

4. Procédé selon l'une quelconque des revendications 1 à 3, **caractérisé en ce que** les charges et/ou additifs (e) comprennent au moins 0,5 % en poids, par rapport au poids total des composés (a), (b) et (c), d'une substance tensioactive comprenant au moins un interpolymère de siloxane-oxyalkylène.

5. Procédé selon l'une quelconque des revendications 1 à 4, **caractérisé en ce que** le composant polyol (b) comprend du polytétraméthylèneglycol.

6. Procédé selon l'une quelconque des revendications 1 à 5, **caractérisé en ce que** les diisocyanates (a) comprennent au moins 97 % en poids de diisocyanate de 4,4'-diphénylméthane, par rapport au poids total des isocyanates (a).

7. Procédé selon l'une quelconque des revendications 1 à 6, **caractérisé en ce que** l'extenseur de chaîne (c) est choisi dans le groupe constitué par l'éthanediol, le 1,3-propanediol, le 1,4-butanediol, le 1,5-pentanediol et le 1,6-hexanediol.

8. Mousse flexible de polyuréthane thermoplastique présentant une masse volumique de 15 à 100 g/dm³, pouvant être obtenue selon l'une quelconque des revendications 1 à 7.

9. Mousse flexible de polyuréthane thermoplastique selon la revendication 8, **caractérisée en ce que** le débit d'air selon la norme DIN EN ISO 7231 (décembre 2010) est supérieur à 0,1 dm³/s, la déformation rémanente après compression selon la norme DIN EN ISO 1856 (novembre 2020) est inférieure à 20 % après 22 heures de conservation à 70 °C et compression à 50 % et
la dureté à la compression (CLD) selon la norme DIN EN ISO 3386 (octobre 2015) est inférieure à 10 kPa.

10. Mousse flexible de polyuréthane thermoplastique selon la revendication 8 ou 9, **caractérisée en ce que** le polyuréthane thermoplastique de la mousse présente un indice de fluidité à chaud selon la norme ASTM D 1238 B à 190 °C et 3,4 kg > 0, de préférence > 10.

11. Mousse flexible de polyuréthane thermoplastique selon l'une quelconque des revendications 8 à 10, **caractérisée en ce que** la mousse fait partie d'un matelas ou d'un garnissage de sièges.

12. Composition comprenant une mousse flexible de polyuréthane thermoplastique selon l'une quelconque des revendications 8 à 11 et un polyuréthane thermoplastique autre que la mousse flexible de polyuréthane thermoplastique, dont la composition est identique à au moins 90 % à celle de ladite mousse.

13. Composition selon la revendication 12, **caractérisée en ce que** le polyuréthane thermoplastique de tous les composants de la composition est identique.

14. Recyclage d'une composition selon la revendication 13, comprenant l'étape de fusion de la composition et de formation de nouveaux produits en polyuréthane thermoplastique.
